# EUROPEAN PATENT APPLICATION

(11) **EP 2 397 966 A1**
(43) Date of publication of application: **21.12.2011**
(21) Application number: 10740928.6
(22) Date of filing: 10.02.2010
(51) Int. Cl.: G06K 7/10

(54) **APPARATUS FOR DETECTING AND PROCESSING DATA IN CASH DESK**

(30) Priority: 10.02.2009 DE 202009001666 U
(71) Applicant: Shandong New Beiyang Information Technology Co., Ltd., Hi-tech Zone Weihai Shandong 264209 (CN)
(72) Inventor: KEMPER, Martin, 48167 Münster (DE); FALKENBURG, Kevin Corneille Bernard, Eersel (NL); WANG, Chuntao, Weihai Shandong 264209 (CN)
(74) Representative: Swinkels, Bart Willem
(86) International application number: PCT/CN2010/070623
(87) International publication number: WO 2010/091639

(57) **Abstract**

An apparatus for detecting and processing identification features by using a detecting device in a cash desk, a microprocessor having a memory is assigned to the apparatus, **characterized in that** the identification features detected locally can be linked with the features stored centrally and the local function can be locked and released by an interlocking circuit.

## Description

### Field of the Invention

Modem cash systems usually adopt commodity feature identification by means of automatically detecting bar codes. This kind of scanning cash desk is well known in supermarkets, and further widely used. However, small-sized cash desks do not adopt bar code readers, but handheld scanners instead which are connected through USB ports.

### Background of the Invention

Wireless identification usually is based on FRID technology. This identification technology adopts a passive antenna chip system which is able be powered in appropriate electric fields and communicate with the other station. It is usually defined as RFID tags, which are identified by different carrier radio frequencies and different components with a data memory. Superior RFID tags even are able to store data. The combination of RFID reader and bar code reader is disclosed by modem identification terminals, e.g. commodity data page of Helicom Corporation. The commodity data is usually a self-sufficient unit, which proceeds storing, processing and transmitting detected ID code later

Adopting RFID chip for person time detection has been known for years. It is usually located at the entrance of a company and runs continuously. In a few cases, the mobile time detection apparatus is also disclosed, which registers user's identification proved by RFID and time identification. The registered data is usually read by data carriers, but also transmitted to the modem apparatus via wireless modules.

The sensor for biological measurement should detect clear identification features which are usually the base for control or system access admission. The fingerprint sensors are very popular now, which have been manufactured in large scale and in low cost. The new biological measurement method, such as iris scanning, is very reliable but expensive. Due to its necessary computing demand, it can only be used in case of complicated computer technology

ED 20 2004 015 835 U1 disclosed an apparatus for transmitting identification features, which is used in cash desks and transmits identification features directly to central station without further processing.

ED 10 2004 012 149 B3 disclosed a method for keeping the dedicated path between the apparatus similar to cash desk equipped with printers and the central station, transmitting answer code and release code.

ED 20 2006 010 705 U1 disclosed an apparatus for processing comparison images via optical sensor, in which the data for evaluation from the optical sensor is transmitted to the central station.

The aforementioned technologies share the same feature, i.e., these technical proposals only are applicable to significant data features for dedicated purposes, and can not be widely used or are too expensive when used in cash desks.

### Summary of the Invention

The purpose of the invention described below lies in adopting part of ideas of said technology, i.e., widely detecting identification methods, applying practically, further the apparatus adopting the technology being able to be manufactured in low cost, and realizing new function features on the small-sized cash desk generally

The purpose of the invention is realized via an apparatus for detecting and processing identification features in cash desk. A microprocessor having a memory is assigned to the apparatus, wherein the identification features detected locally can be linked with the features stored centrally and a local function can be locked and released by an interlocking circuit.

The apparatus of the invention consists of one or multiple detecting apparatuses, one or multiple corresponding central stations. The invention discloses that a single detecting apparatus is assigned with a microprocessor and a memory, wherein a monitor can be included or assigned. Besides, RFID module and biological measurement identification module are assigned in the invention. The apparatus of this invention can be linked with cash desk system preferentially, in which the features of commodities to be sold can be linked with personal identification features. The commodity features may be known bar codes or the RFID tags corresponding to the commodities.

This invention proposes that the commodity features can be linked with the customer's identification via an interlocking circuit, and ascertained customers can buy ascertained commodities or the commodity can be assigned with different functions, such as different prices. For the unauthorized customers, the cash desk is able to lock via interlocking circuit or settle standard functions. This invention further proposes that the interlocking circuit is just related to the commodities. For example, a lottery ticket which can be described as buyable commodity needs the special identification of customers, so that the corresponding relation can be ascertained when cashing award.

Proposed for constructing interlocking circuit, this interlocking circuit is executed via a conventional microprocessor assigned with memory. The locking and releasing of commodity can be detected via the preset list in the comparison memory. External memory can also be adopted, which is connected via network, such as wireless module for assignment. The wireless module can also be GSM or UMTS module, wherein the interlocking can be realized via mutual information from the central station. Optionally, conventional WLAN module, Wi-Fi, HSDPA or other wireless standard can be adopted, wherein parallel running can be implemented, for mobile wireless network. Two or more SIM cards or corresponding admission answer code may be included, which can be executed by means of software or hardware.

This invention proposes that the interlocking circuit is integrated into a handheld scanner, so as to establish direct connection between detection commodity feature and interlocking circuit. The preset monitor is able to display information of special operators, which involves the special features of commodities related to customer's personal identification.

The function of interlocking circuit is realized by means of transmitting commodity identification code to the cash desk. The cash desk needs to wait for bar code, till the completion of the cashing process. The logic circuit of the interlocking circuit can be centrally set partially, and carries out information exchanges for ID codes and the related releasing. In such way the current cash desks are able to realize completely compatible data detection,in no need of changing software for cash desks. In this case, the whole logic circuit of the interlocking circuit is integrated into the interlocking circuit. To improve the operability of the detection apparatus, a bar code reader may be integrated.

A further improving implementation method for the interlocking circuit is proposed: for example, processing large number of lists in the cash desk and data bank itself or jointing different identification features. Depending on application situations, preferentially one or other technical principle is adopted.

Preferentially a biological measurement detection module for identifying customers can be adopted, which is assigned with other identification features corresponding to the customers, such as payment cards, customer cards or features stored in the mobile phones of customers. In the simplest cases, a sensorfingerprint identification sensor can be adopted. But other biological measurement identifying method can be adopted, such as iris identification or other special features (such as transmission of light, light reflection, phlebogram or pulsilogram) which is meaningful combination. Through obtaining evaluation from the biological measurement detection model by means of tolerance, and depending on the needed security, multiple users can be identified fast and reliably. Besides, the parameter of the tolerance includes basic data and detailed data, or even is assigned to various information of the detection module, further to complete information of carriers of customers, which can be stored in the payment cards or customer cards.

However, the ideal method is to adopt the existed features of the network connection, so as to download and change the comparison data of biological measurement via wireless network, in which the comparison data can be stored in the detection apparatus or in any carrier, such as the RFID data carrier

In the wireless network, according to the virtual dedicated path, blank code can be sent to obtain operation connection and the time intervals between the blank codes alter in such way that the time interval remains minimal. Fixed time interval can be proposed for use.

This function shall be allowed in an embodiment. A commercially general cash desk shall be equipped with a general bar code scanner. Usually, the bar code scanner is connected with the cashing system through a USB port, in which way the scanned data can be processed and stored in the microprocessor by the software of the cash desk.

When expanding the function in consideration of the application of customer cards or auxiliary paying method, a large amount of new programming codes will be needed, and even new hardware of the cash desk is needed in some cases.

However, if said interlocking circuit replaces the current scanner, all of selected commodities can be filtered and inspected via the apparatus of the invention, till the interlocking circuit transmits the bar code scanned by the scanner to the cash desk in the simplest way. The filtering and the detection can be realized at the central station and transmitted via the existing wireless network. The branches can assign new functions to the cash desks in no need of high investment.

Due to its universality, the interlocking circuit is not applied in a general aspect, but to commodities or commodity groups or other functions related to cash desks, and the user as well, for example, the cancelling of an order. For the commodity identification code, other links may be produced via the customer card, fingerprint sensor and the data related to other customers.

The preset cashless pay function is very important, and may reduce cash turnover proportionately so that cost may be saved.

Due to the realization of whole pre-detection on the features of biological measurement related to interlocking circuit, the modification on pay function and other functions for the biological measurement may be realized in a simple way.

### Brief Description of the Drawings

The following drawings further explicate the invention:
Fig. 1 shows the structure of the detection apparatus of the invention;
Fig. 2 shows the structure of a preferential implementation example of the detection apparatus of the invention;
Fig. 3 shows the integration of detection apparatus into handheld a scanner

### Detailed Description of Embodiments

The operation principle demonstrated in the drawings is as follows:

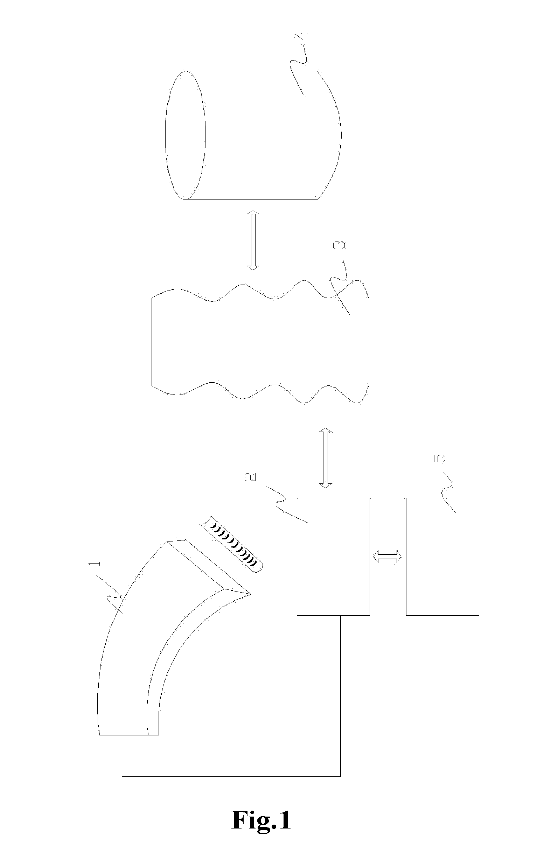

The Fig. 1 shows how the registered bar code works following the design scheme of the invention. The scanner 1 scans the bar code of the commodity, which is transmitted to the interlocking circuit 2. The interlocking circuit is able to filter the bar code information and be connected to the network 3, which can be mobile communication network. The central computer 4 which involves application procedure and data base receives the information. After the confirmation and evaluation of bar code, the information is added and changed, for example, the price information can be added to the original bar code information. The new and added information is transmitted back to interlocking circuit 2 via network 3, waiting for reply and the information is locked to avoid uplink. The new and added information will be transmitted to receiving unit 5, which may be a cash register. The return information can be the information added in the embodiment, but it may also include price, for example, the requested information has been paid by the customer In this simple case, the customer can get the commodity without paying.

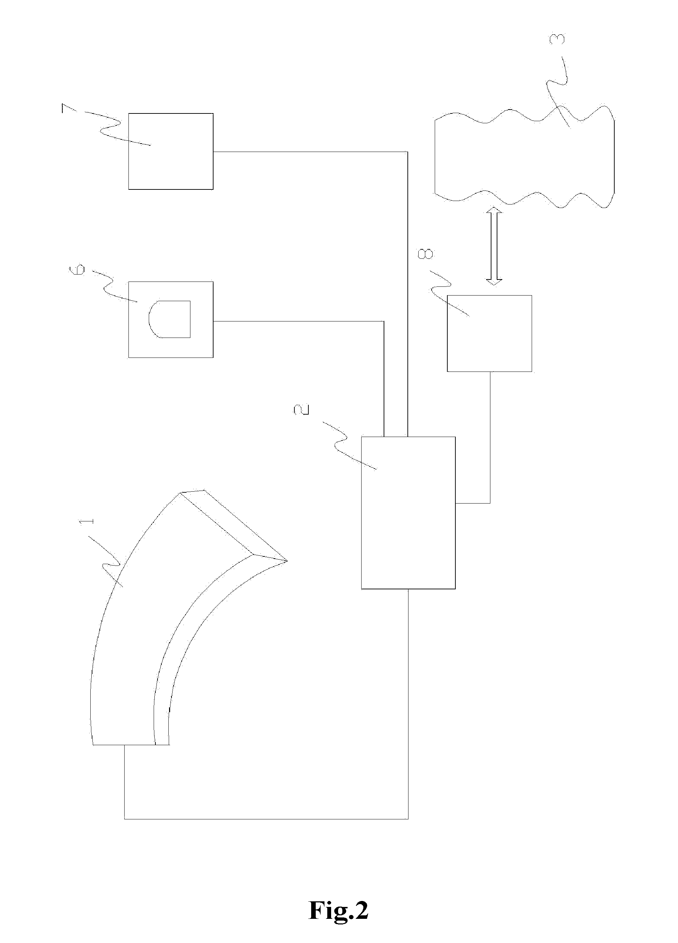

Fig. 2 shows the strengthened information resource, which may be bar codes, but may also be information of RFID tags, sensorfingerprint identification sensor or any biological measurement apparatus. Thus, the scanner 1 may be combination of sensorfingerprint identification sensor 6 and RFID reader 7, which is connected with or mapped to interlocking circuit 2. The interlocking circuit 2 is mapped to GSM module or UMTS module 8, which transmits the data to network 3.

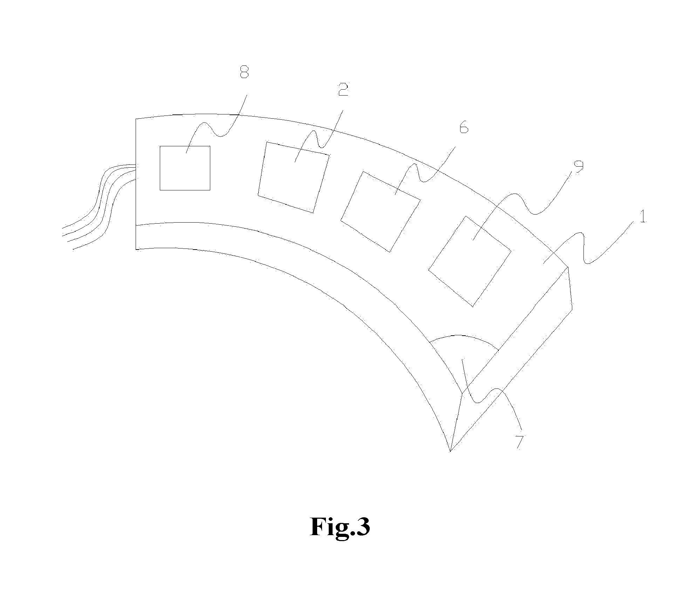

Ideally, the scanner includes all necessary components for inputting of interlocking circuit. In this embodiment, all the components are integrated to the handheld scanner 1, shown in Fig. 3. It also includes monitor 9, which may also include a touch screen. The sensorfingerprint identification sensor 6, RFID reader 7 and GSM module 8 are connected to interlocking circuit 2 in this embodiment.

This invention protects a technology for transmitting data to central station via mobile communication network and the related technology of evaluation / confirmation. The central control station adds information such as price of products, and sends back the original and added information, which may be applied to any cash register. The relatively simple cash desk is able to add online function and other new functions. Importantly, with this technology, an interactive cash desk can be realized, which is simple and low in cost. All the prices and product information (such as the added information) can be realized via the central control platform. Upon the application of this patent, a solution for centrally controlled cash desk with low cost can be realized.

## Claims

1. An apparatus for detecting and processing identification features by using a detecting device in a cash desk, wherein a microprocessor having a memory is assigned to the apparatus, **characterized in that** the identification features detected locally can be linked with the features stored centrally and a local function can be locked and released by an interlocking circuit.

2. The apparatus according to claim 1, **characterized in that** the detection apparatus is connected to a central computer by the assigned interlocking circuit via network wherein the factors which are locked and released by the local interlocking circuit are centrally stored in the central computer and are transmitted via said network.

3. The apparatus according to claim 1 or 2, **characterized in that** said interlocking circuit is designed to establish network connection with wireless module.

4. The apparatus according to any one of said claims, **characterized in that** said detection apparatus is assigned with a monitor

5. The apparatus according to any one of said claims, **characterized in that** said detection apparatus is assigned with a detection module of biological measurement

6. The apparatus according to claim 5, **characterized in that** said detection module of the biological measurement is designed to be sensorfingerprint identification sensor

7. The apparatus according to any one of said claims, **characterized in that** the comparison data applied to biological measurement features and used by the interlocking circuit is stored in the apparatus or memory accessible externally

8. The apparatus according to any one of said claims, **characterized in that** the biological measurement information used by the interlocking circuit is divided into basic data and detailed data, wherein the detailed data is adjustableto have alterable tolerance.

9. The apparatus according to any one of said claims, **characterized in that** said detection apparatus is assigned with a bar code reader

10. The apparatus according to any one of said claims, **characterized in that** download and change the comparison data of biological measurement via wireless network , wherein said comparison data can be stored in said detection apparatus or said RFID data carrier

11. The apparatus according to any one of said claims, **characterized in that** said biological measurement data of said sensorfingerprint identification sensor can be linked to the data of other biological measurement, such as transmission of light, light reflection, phlebogram or pulsilogram.

12. The apparatus according to any one of said claims, **characterized in that** the evaluation of biological measurement sensor is realized by means of artificial neural network.

13. The apparatus according to any one of said claims, **characterized in that** part of said apparatus is integrated to the handheld scanner, or to the corresponding profile of the handheld scanner.
